# EUROPÄISCHE PATENTSCHRIFT

(11) **EP 3 414 981 B1**
(45) Veröffentlichungstag und Bekanntmachung des Hinweises auf die Patenterteilung: **30.12.2020**
(21) Anmeldenummer: 18177300.3
(22) Anmeldetag: 12.06.2018
(51) Int. Cl.: A01B 51/00, A01B 63/32, A01B 73/00

(54) **LANDWIRTSCHAFTLICHE MASCHINE**
AGRICULTURAL MACHINE
MACHINE AGRICOLE

(30) Priorität: 13.06.2017 DE 102017112982
(43) Veröffentlichungstag der Anmeldung: 19.12.2018
(73) Patentinhaber: Reiter, Thomas, 4707 Schlüsslberg (AT)
(72) Erfinder: Reiter, Thomas, 4707 Schlüsslberg (AT)
(74) Vertreter: Puschmann Borchert Kaiser Klettner Patentanwälte Partnerschaft mbB

(56) Entgegenhaltungen:
- EP-A1- 0 571 794
- EP-A1- 1 709 858
- DE-A1- 2 715 375
- DE-A1-102004 022 534
- FR-A1- 2 945 403
- US-A1- 2015 020 492
- US-B1- 7 073 604

## Beschreibung

Die Erfindung betrifft eine landwirtschaftliche Maschine gemäß dem Oberbegriff des Anspruchs 1.

Eine landwirtschaftliche Maschine umfasst einen Tragrahmen, der wenigstens zwei Ausleger trägt, wobei an wenigstens einem Ausleger eine Arbeitseinheit zur Erntegutbearbeitung angeordnet ist.

Erntegutbearbeitung umfasst das Mähen, Aufnehmen und Weiterverarbeiten bzw. wieder Ablegen (Schwaden) von Dauergrünland und Feldfutter in den Zuständen von frisch gemäht über verschiedene Anwelkgrade (Trockenmasse) bis zum trockenen Heu sowie die Aufnahme und Weiterverarbeitung von Ganzpflanzensilage, z.B. Grünschnittroggen, sowie von Stroh von verschiedenen Getreidesorten, bspw. Mais, Raps, sowie die Aufnahme von Ernteresten von anderen Feldfrüchten. Das Dokument US 2015/0020492 A1 betrifft eine landwirtschaftliche Erntemaschine mit den Merkmalen gemäß dem Oberbegriff des Anspruchs 1. Das Dokument FR 2 945 403 A1 umfasst eine Heuwerbungsmaschine mit an Auslegern angeordneten Arbeitseinheiten, die zum Transport vertikal verschwenkbar sind.

Am Ausleger ist eine Trageinrichtung vorgesehen, über die die Arbeitseinheit am Ausleger gehalten wird. Zudem ist eine dem Ausleger und der Arbeitseinheit zugeordnete Verstelleinrichtung vorgesehen, die die Arbeitseinheit gegenüber dem Ausleger in eine Transportstellung und eine Arbeitsstellung bringen kann, wobei in Transportstellung die Arbeitseinheit vom Boden abgehoben ist und in Arbeitsstellung auf dem Boden aufsetzt. Die Verstelleinrichtung umfasst wenigstens einen Aushub-Zylinder, der gegenüber dem zugeordneten Ausleger und der Arbeitseinheit abgestützt ist und bei Druckbeaufschlagung einen Versatz der Arbeitseinheit gegenüber dem Ausleger mit wenigstens einem vertikalen Anteil ermöglicht.

Auf diese Weise kann die Arbeitseinheit hydraulisch zwischen den beiden Stellungen hin und her gefahren werden. Das Verfahren der Arbeitseinheit von der Arbeitsstellung in die Transportstellung wird auch als Ausheben bezeichnet.

Erfindungsgemäß umfasst die Verstelleinrichtung einen Seitenversatz-Zylinder, der gegenüber der Arbeitseinheit und dem Ausleger abgestützt ist, also mittelbar oder unmittelbar bei Druckbeaufschlagung eine Bewegung der Arbeitseinheit mit einem horizontalen Anteil ermöglicht.

Auf diese Weise kann die Arbeitseinheit beim Ausheben nach außen geschoben werden, so dass eine Kollision von zwei nebeneinanderliegenden Arbeitseinheiten vermieden werden kann, obwohl die zwei Arbeitseinheiten in der Arbeitsstellung nah beieinander angeordnet sein können, so dass nur geringe Rech-Verluste entstehen können.

Der Aushubzylinder mit der den Aushubzylinder in einer in Aushubrichtung beaufschlagenden ersten Zylinderkammer ist mit einer ersten Zylinderkammer des Seitenversatz-Zylinders zusammengeschlossen, wobei die erste Zylinderkammer des Seitenversatz-Zylinders in Versatzrichtung, insbesondere nach außen, wirkt.

Dies hat zur Folge, dass bei Druckbeaufschlagung des Aushubzylinders zeitgleich ein Druck auf den Seitenversatz-Zylinder wirkt und so eine synchrone Aushub- / Seitenversatzbewegung möglich wird.

Da die Arbeitseinheit so lange auf dem Boden aufgesetzt ist, bis der notwendige Zylinderdruck aufgebaut ist, der ein Ausheben ermöglicht, reicht die vom Seitenversatzzylinder ausgeübte Kraft im Allgemeinen nicht aus, um einen Seitenversatz in dieser Position zu ermöglichen.

Erst wenn der Druck auf den Aushubzylinder ausreichend groß ist, wird ein Anheben der Arbeitseinheit ermöglicht, wobei auch sofort der Seitenversatz ausgeführt wird, da keine entgegenstehende Kraft mehr vorhanden ist.

Wird Druck von dem Hydrauliksystem in Aushubrichtung ausgeübt, führt dies dazu, dass zeitgleich der Seitenversatzzylinder in Versatzrichtung also bevorzugt nach außen verfahren wird. Wird also durch die Druckbeaufschlagung des Aushubzylinders die Arbeitseinheit von der Arbeitsstellung in die Transportstellung verfahren, wirkt gleichzeitig der Seitenversatz-Zylinder derart, dass die Arbeitseinheit seitlich insbesondere von der zweiten Arbeitseinheit weg verschoben wird, sobald der Kontakt mit dem Boden und die damit einhergehende Reibung überwunden wird.

Bevorzugt ist die zweite Zylinderkammer, insbesondere die Ringkammer des Seitenversatz-Zylinders, mit einem Druckspeicher verbunden.

Wird die erste Zylinderkammer des Aushubzylinders druckentlastet, was zu einer Absenkung der Arbeitseinheit von der Transportstellung in die Arbeitsstellung führt, wirkt der Druckspeicher derart auf den Seitenversatz-Zylinder, dass dieser nach innen gefahren wird.

Auf diese Weise erfolgt gleichzeitig mit der Absenkung eine Verschiebung der Arbeitseinheit entgegen der Versatzrichtung, also bevorzugt von außen nach innen. Gibt es zwei nebeneinanderliegende Arbeitseinheiten, können diese so nahe aneinander gebracht werden.

Gemäß einer weiteren bevorzugten Ausgestaltung kann die Verstelleinrichtung Zugstangen umfassen, über die die Arbeitseinheit mit dem Aushubzylinder verbunden ist. Auf diese Weise kann die Zugstange die Arbeitseinheit in Aushubrichtung in eine Transportstellung in vertikale Richtung mitnehmen. In der Betriebsstellung wird jedoch eine freie Beweglichkeit in Längsrichtung der Zugstange gegenüber dem Aushubzylinder ermöglicht,

Bevorzugt ist die Zugstange ein Stangenelement, das in Längsrichtung mit einem Anschlag versehen ist, der in Anschlagrichtung mittelbar oder unmittelbar gegenüber dem Aushubzylinder wirkt, wobei das Stangenelement entgegen der Anschlagrichtung in Längsrichtung beweglich ist. Bevorzugt ist eine solche Ausgestaltung durch ein Stangenelement mit einem in Längsrichtung verlaufenden Langloch ausgeführt. Dieses Stangenelement kann von einem Bolzen geführt werden, der fest gegenüber dem verfahrenden Teil des Aushubzylinders angebracht ist.

Ferner kann vorgesehen sein, dass die Verstelleinrichtung einen Verstellblock umfasst, der schwenkbar gegenüber dem Ausleger angeordnet ist, wobei zwei Zugstangen über einen Verstellblock angelenkt sind.

Der Verstellblock kann mit einem oder zwei Aushubzylindern betätigt werden.

Gemäß einer weiteren bevorzugten Ausgestaltung weist die Trageinrichtung wenigstens zwei federbelastete (also entlastete) Unterlenker auf, wobei die Unterlenker je über ein Kugelkopflager sowohl mit dem Ausleger als auch mit der Arbeitseinheit verbunden sind.

Durch die Anbindung der Arbeitseinheit über die Lenker mit den Kugelkopflagern kann auf einfache Weise eine Stützwirkung in vertikaler Richtung erreicht werden, wobei dennoch ein Seitenversatz der Arbeitseinheit gegenüber dem Ausleger ermöglicht wird.

Insbesondere ist auch der Seitenversatz-Zylinder über ein Kugelkopflager an der Arbeitseinheit angebunden.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine erfindungsgemäße landwirtschaftliche Maschine mit zwei Auslegern in Draufsicht;
- Fig. 2a: einen Ausleger ohne die Arbeitseinheit in perspektivischer Ansicht in Arbeitsstellung;
- Fig. 2b: einen Ausleger ohne die Arbeitseinheit in perspektivischer Ansicht in Transportstellung;
- Fig. 3a: einen Ausleger ohne die Arbeitseinheit in Draufsicht in Arbeitsstellung;
- Fig. 3b: einen Ausleger ohne die Arbeitseinheit in Draufsicht in Transportstellung; und
- Fig. 4: eine hydraulische Verschaltung der Aushub- und Versatzzylinder.

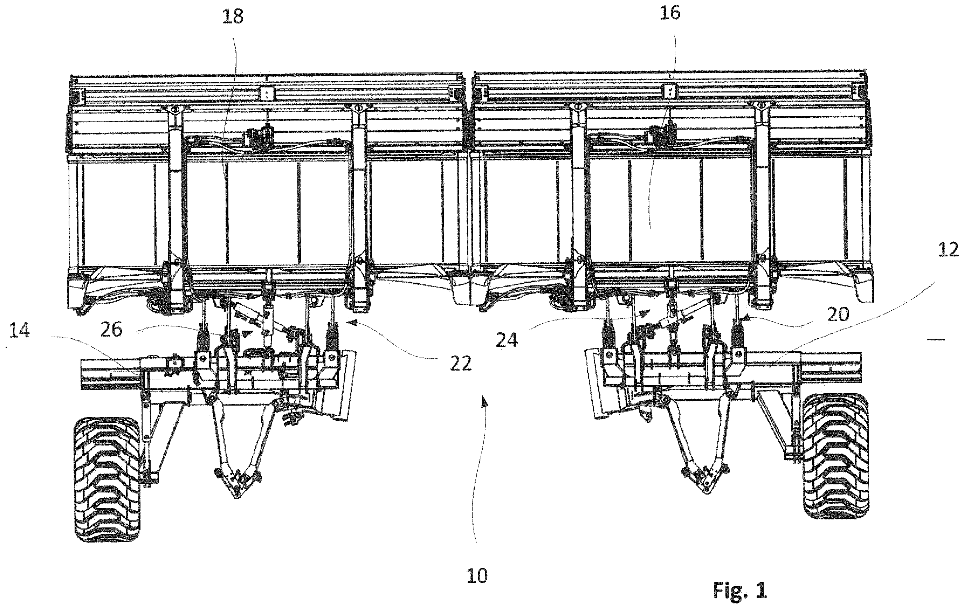

Fig. 1 zeigt eine erfindungsgemäße landwirtschaftliche Maschine 10 mit zwei Auslegern 12, 14 in Draufsicht, wobei der die beiden Ausleger 12, 14 verbindende zentrale Rahmen aus Gründen der Übersicht nicht dargestellt ist. Von den Auslegern 12, 14 wird jeweils eine Arbeitseinheit 16, 18 getragen. Die Arbeitseinheit 16, 18, die im vorliegenden Beispiel als Bandschwader ausgebildet ist, ist je über eine Trageinrichtung 20, 22 an dem zugeordneten Ausleger gelagert. Neben der Trageinrichtung 20, 22 ist eine Verstelleinrichtung 24, 26 vorgesehen, die die Lage der Arbeitseinheit 16, 18 gegenüber dem Ausleger 12, 14 verändern kann.

Fig. 1 zeigt die Arbeitseinheiten 16, 18 in ihrer Arbeitsstellung in einem Zustand, in dem die Arbeitseinheiten 16, 18 nebeneinander liegen.

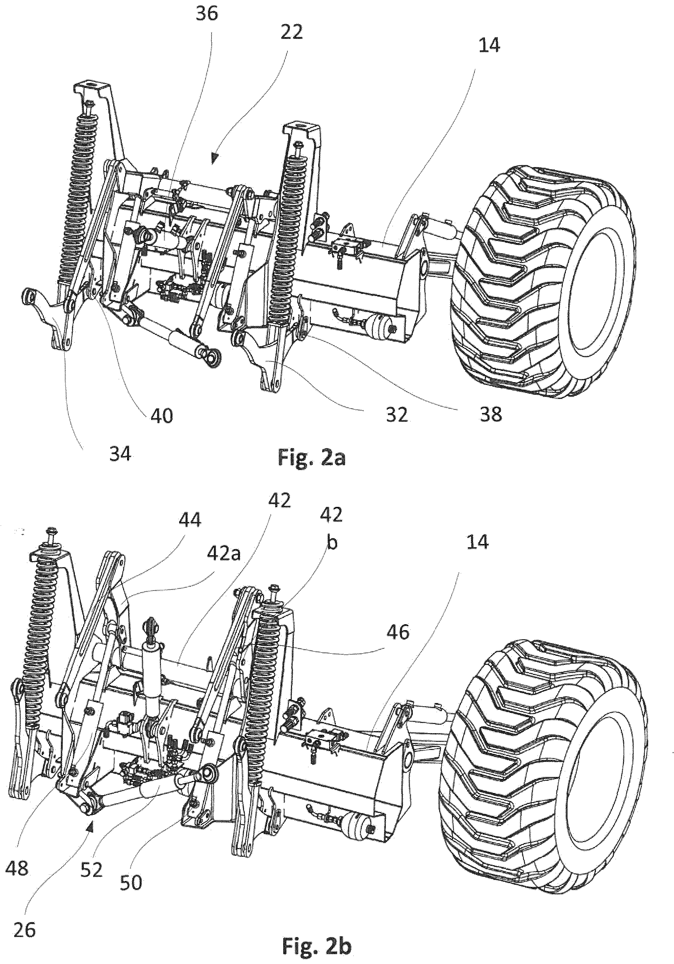

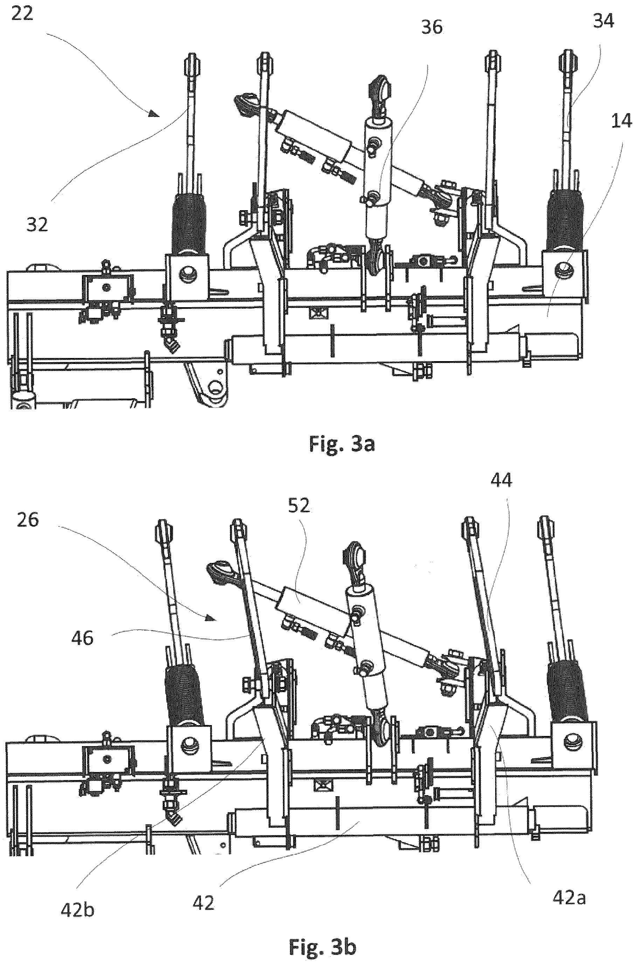

In den nachfolgenden Figuren 2a, 2b und 3a, 3b werden insbesondere Trageinrichtung 22 und die Verstelleinrichtung 26 näher beschrieben. Beide Seiten der landwirtschaftlichen Maschine 10 sind analog aufgebaut.

Fig. 2a zeigt den Ausleger 14 aus Gründen der Übersichtlichkeit ohne die Arbeitseinheit 18 in Arbeitsstellung. Die Trageeinrichtung 22 umfasst zwei mit Federn beaufschlagte Lenker, die die Unterlenker 32, 34 bilden und einen Oberlenkerzylinder 36, der den Oberlenker bildet. Auf diese Weise ist die Arbeitseinheit 18 entlastet gegenüber dem Ausleger 14 getragen, wobei eine Neigung der Arbeitseinheit 18 über den Oberlenkerzylinder 36 eingestellt werden kann. Die Lenker 32, 34 sind über Kugelkopflager 38, 40 am Ausleger 14 angebunden. Diese ermöglichen neben einer Vertikalbewegung des Lenkers auch einen seitlichen Versatz der Arbeitseinheit 18 gegenüber dem Ausleger 14.

Fig. 2b zeigt den Ausleger 14 mit der Trageinrichtung 22 und der Verstelleinrichtung 26 im ausgehobenen Zustand bzw. in der Transportstellung. Die Verstelleinrichtung umfasst einen Verstellblock 42, der gegenüber dem Ausleger 14 schwenkbar angeordnet ist. An Schwenkarmen 42a, 42b sind Zugstangen 44, 46 angebunden, die an ihrem einen Ende über ein Langloch mit in den Schwenkarmen integrierten Zapfen zusammenwirken. Am anderen Ende sind die Zugstangen mit der Arbeitseinheit 18 über Kugelkopflager verbunden. Der Verstellblock 42 wird über zwei Aushubzylinder 48, 50, die sich gegenüber dem Ausleger 14 abstützen, verschwenkt. Dadurch kann über die Zugstangen 44, 46 die Arbeitseinheit 18 von der Arbeitsstellung in die Transportstellung ausgehoben werden oder umgekehrt.

Ferner umfasst die Verstelleinrichtung 26 einen Seitenversatzzylinder, der gegenüber dem Ausleger 14 der Arbeitseinheit 18 über ein Kugelkopflager verbunden ist. Durch diese Anordnung der Verstelleinrichtung 26, kann sowohl ein Ausheben in vertikaler Richtung als auch ein seitlicher Versatz durch hydraulische Betätigung der Aushubzylinder und des Seitenversatzzylinders erfolgen.

Fig. 3a zeigt einen Ausleger 14 gemäß Fig. 2a in Draufsicht in der Arbeitsstellung. Die hier beschriebene Trageinrichtung 22, die die hier nicht gezeigte Arbeitseinheit trägt, umfasst den Unterlenker 32 und den Unterlenker 34 und wird ferner von dem Oberlenkerzylinder 36 geführt. Die Unterlenker 32, 34 und der Oberlenkerzylinder sind unmittelbar oder mittelbar gegenüber dem Ausleger 14 abgestützt. In der in Fig. 3a gezeigten Arbeitsstellung liegen die Unterlenker 32, 34 im Wesentlichen orthogonal zum Ausleger 14.

Fig. 3b zeigt den Ausleger 14 gemäß Fig. 2b in der Transportstellung in Draufsicht. In der Transportstellung erfolgt ein Seitenversatz der nicht gezeigten Arbeitseinheit 18 nach außen. Die Verstelleinrichtung 26 umfasst zwei Zugstangen 44, 46, die mit Bolzen an den Schwenkarmen 42a, 42b des Verstellblocks 42 längsverschieblich geführt und gehalten sind.

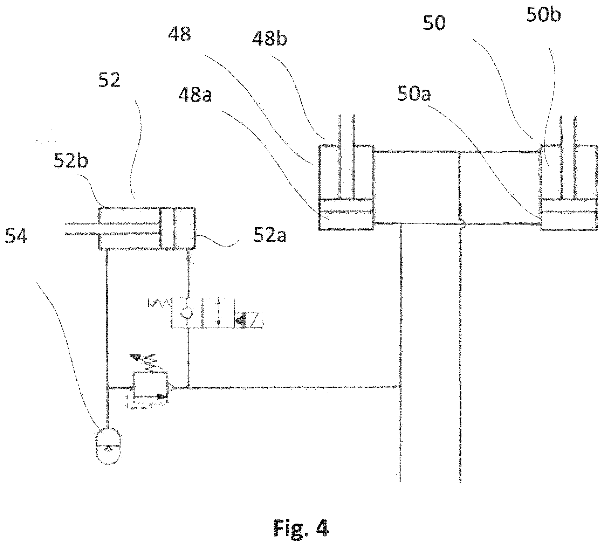

Die hydraulische Verschaltung ist in Fig. 4 näher beschrieben. So sind die Kolbenräume 48a, 50a der Aushubzylinder 48, 50 mit dem Kolbenraum 52a des Seitenversatzzylinders 52 verbunden. Der Ringraum 52b des Seitenversatzzylinders 52 ist an einen Druckspeicher 54 angeschlossen, so dass bei entsprechend niedrigem Öldruck in den Kolbenräumen 48a, 50a, 52a der Seitenversatz-Zylinder 52 eingeschoben wird. Diese Situation liegt bei der Schwimmstellung an einem Traktorsteuergerät vor, sodass in der Arbeitsstellung die beiden Arbeitseinheiten 18, 16 nebeneinander angeordnet sind, wobei im Kollisionsfall ein Ausweichen entgegen des Drucks ermöglicht wird. Der Druckspeicher 54 kann nur wirksam werden, wenn der Kolbenraum 52a über das zugeordnete Ventil entlastet wird. Durch diese Verschaltung wird bei Ausheben automatisch der Seitenversatzzylinder 52 ausgefahren, so dass sich der Abstand zwischen den Arbeitseinheiten 16, 18 erhöht und eine Kollision vermieden wird.

Auf diese Weise ist eine einfache Aushubsteuerung mit Seitenversatz geschaffen.

### Bezugszeichenliste

- 10: landwirtschaftliche Maschine
- 12: Ausleger
- 14: Ausleger
- 16: Arbeitseinheit
- 18: Arbeitseinheit
- 20: Trageinheit
- 22: Trageinheit
- 24: Verstelleinrichtung
- 26: Verstelleinrichtung
- 32: Unterlenker
- 34: Unterlenker
- 36: Oberlenkerzylinder
- 38: Kugelkopflager
- 40: Kugelkopflager
- 42: Verstellblock
- 42a: Schwenkarm
- 42b: Schwenkarm
- 44: Zugstange
- 46: Zugstange
- 48: Aushubzylinder
- 48a: Kolbenraum
- 48b: Ringraum
- 50: Aushubzylinder
- 50a: Kolbenraum
- 50b: Ringraum
- 52: Seitenversatzzylinder
- 52a: Kolbenraum
- 52b: Ringraum
- 54: Druckspeicher

## Patentansprüche

1. Landwirtschaftliche Maschine (10) umfassend einen Zentralrahmen, der wenigstens zwei Ausleger (12, 14) trägt, wobei an jedem Ausleger eine Arbeitseinheit (16, 18) zur Erntegutbearbeitung angeordnet ist, wobei eine Trageinrichtung (20, 22) vorgesehen ist, über die die Arbeitseinheit (16, 18) am Ausleger (12, 14) gehalten wird, wobei ferner eine dem Ausleger zugeordnete Verstelleinrichtung (24, 26) vorgesehen ist, die die Arbeitseinheit (16, 18) gegenüber dem Ausleger (12, 14) in eine Transportstellung und in eine Arbeitsstellung bringen kann, wobei in Transportstellung die Arbeitseinheit (16, 18) vom Boden abgehoben ist und in Arbeitsstellung auf dem Boden aufsitzt, wobei die Verstelleinrichtung (24, 26) wenigstens einen Aushub-Zylinder (48, 50) umfasst, der gegenüber dem zugeordneten Ausleger (12, 14) mittelbar oder unmittelbar abgestützt ist und der mit der Arbeitseinheit (16, 18) mittelbar oder unmittelbar verbunden ist, so dass bei Druckbeaufschlagung des Aushub-Zylinders (48, 50) ein Versatz der Arbeitseinheit gegenüber dem Ausleger mit wenigstens einem vertikalen Bewegungsanteil erfolgt, wobei die Verstelleinrichtung (24, 26) einen Seitenversatz-Zylinder (52) umfasst, der gegenüber der Arbeitseinheit (16, 18) und dem Ausleger (12, 14) abgestützt ist und bei Druckbeaufschlagung eine Bewegung der Arbeitseinheit (16, 18) mit einem horizontaler Anteil ermöglicht **dadurch gekennzeichnet, dass** der wenigstens eine Aushubzylinder (48, 50) mit seiner den Aushubzylinder (48, 50) in einer in Aushubrichtung beaufschlagenden ersten Zylinderkammer (48a, 50a) mit der ersten Zylinderkammer (52a) des Seitenversatz-Zylinders (52), die in Versatzrichtung wirkt, zusammengeschlossen ist.

2. Landwirtschaftliche Maschine nach Anspruch 1, **dadurch gekennzeichnet, dass** die erste Zylinderkammer der Kolbenraum (48a, 50a, 52a) des Aushubzylinders (48, 50, 52) und des Seitenversatzzylinders ist.

3. Landwirtschaftliche Maschine nach einem der vorangehenden Ansprüche, **dadurch gekennzeichnet, dass** die zweite Zylinderkammer, insbesondere die Ringkammer (52b), des Seitenversatz-Zylinders (52) mit einem Druckspeicher (54) verbunden ist.

4. Landwirtschaftliche Maschine nach einem der vorangehenden Ansprüche, **dadurch gekennzeichnet, dass** die Verstelleinrichtung (24, 26) wenigstens eine Zugstange (44, 46) umfasst, über die die Arbeitseinheit (16, 18) mit dem Aushubzylinder (48, 50) derart verbunden ist, dass die Zugstange (44, 46) in einer Transportstellung die Arbeitseinheit (16, 18) in Aushubrichtung mitnimmt und in der Arbeitsstellung eine freie Beweglichkeit in Längsrichtung der Zugstange (44, 46) gegenüber dem Aushubzylinder (48, 50) ermöglicht.

5. Landwirtschaftliche Maschine nach Anspruch 4, **dadurch gekennzeichnet, dass** die Verstelleinrichtung (24, 26) einen Verstellblock (42) umfasst, der schwenkbar gegenüber dem Ausleger (12, 14) angeordnet ist, wobei zwei Zugstangen (44, 46) über einen Verstellblock (42) angelenkt sind.

6. Landwirtschaftliche Maschine nach einem der vorangehenden Ansprüche 4 oder 5, **dadurch gekennzeichnet, dass** die Zugstange (44, 46) ein Stangenelement aufweist, das in Längsrichtung mit einem Langloch versehen ist, das mit einem mit dem Aushubzylinder (48, 50) mitbewegten Bolzen zusammenwirkt.

7. Landwirtschaftliche Maschine nach einem der vorangehenden Ansprüche, **dadurch gekennzeichnet, dass** die Trageinrichtung (20, 22) wenigstens zwei Unterlenker (32, 34) umfasst, wobei die Lenker je über ein Kugelkopflager (38,40) sowohl mit dem Ausleger (12, 14) als auch mit der Arbeitseinheit (16, 18) verbunden sind.

8. Landwirtschaftliche Maschine nach einem der vorangehenden Ansprüche, **dadurch gekennzeichnet, dass** die Trageinrichtung einen Oberlenkerzylinder (36) umfasst, der je über eine Kugelkopfanbindung mit der Arbeitseinheit (16, 18) und mit dem Ausleger (12 14) verbunden ist.

9. Landwirtschaftliche Maschine nach einem der vorangehenden Ansprüche, **dadurch gekennzeichnet, dass** die Arbeitseinheit (16, 18) über sogenannte Gleitteller oder Gleitkufen getragen wird.

10. Landwirtschaftliche Maschine nach einem der vorangehenden Ansprüche, **dadurch gekennzeichnet, dass** die Arbeitseinheit (16, 18) ein Bandschwader ist.

## Claims

1. Agricultural machine (10) comprising a central frame which supports at least two booms (12, 14), each boom having a working unit (16, 18) arranged thereon for processing harvested material, with support means (20, 22) being provided by which the working unit (16, 18) is held on the boom (12, 14), an adjustment device (24, 26) associated with the boom being further provided, which adjustment device is adapted to bring the working unit (16, 18) into a transport position and into a operating position with respect to the boom (12, 14), where, in its transport position, the working unit (16, 18) is raised from the ground and, in its operating position, it rests on the ground, the adjusting device (24, 26) comprising at least one hoisting cylinder (48, 50) that is supported directly or indirectly with respect to the associated boom (12, 14) and that is connected directly or indirectly to the working unit (16, 18) so that pressure applied to the hoisting cylinder (48, 50) will cause the working unit to be offset with at least one vertical component of movement relative to the boom, wherein the adjusting device (24, 26) comprises a lateral offset cylinder (52) which is supported with respect to the working unit (16, 18) and to the boom (12, 14) and which, when pressurized, enables movement of the working unit (16, 18) with a horizontal component of movement, **characterized in that** said at least one hoisting cylinder (48, 50) has its first cylinder chamber (48a, 50a), which pressurizes said hoisting cylinder (48, 50) in the hoisting direction, connected to the first cylinder chamber (52a) of the lateral offset cylinder (52), which chamber (52a) acts in the direction of offset.

2. Agricultural machine according to claim 1, **characterized in that** the first cylinder chamber constitutes the piston chamber (48a, 50a, 52a) each of the hoisting cylinder (48, 50, 52) and of the lateral offset cylinder.

3. Agricultural machine according to any one of the preceding claims, **characterized in that** the second cylinder chamber, in particular the annular chamber (52b), of the lateral offset cylinder (52) is connected to a pressure reservoir (54).

4. Agricultural machine according to any one of the preceding claims, **characterized in that** the adjusting device (24, 26) comprises at least one connecting rod (44, 46) that connects the working unit (16, 18) to the hoisting cylinder (48, 50) in such a way that, in a transport position of the working unit (16, 18), the connecting rod (44, 46) will entrain the working unit (16, 18) in the hoisting direction and, in the operating position of the working unit (16, 18), it will enable free movement thereof with respect to the hoisting cylinder (48, 50) in the longitudinal direction of the connecting rod (44, 46).

5. Agricultural machine according to claim 4, **characterized in that** the adjusting device (24, 26) comprises an adjusting block (42) which is arranged to be pivotal relative to the boom (12, 14), with two connecting rods (44, 46) each being articulated by means of one adjusting block (42).

6. Agricultural machine according to one of claims 4 or 5 above, **characterized in that** the connecting rod (44, 46) comprises a rod member that is provided with an elongated hole in the longitudinal direction, which hole cooperates with a pin that moves with the hoisting cylinder (48, 50).

7. Agricultural machine according to any one of the preceding claims, **characterized in that** the support means (20, 22) comprises at least two lower links (32, 34) that are each connected both to the boom (12, 14) and to the working unit (16, 18) via a ball rod end bearing (38, 40).

8. Agricultural machine according to any one of the preceding claims, **characterized in that** the support means comprises an upper link cylinder (36) that is connected to the working unit (16, 18) and to the boom (12, 14) via a ball head linkage each.

9. Agricultural machine according to any one of the preceding claims, **characterized in that** the working unit (16, 18) is supported on so-called sliding saucers or sliding skids.

10. Agricultural machine according to any one of the preceding claims, **characterized in that** the working unit (16, 18) is a belt merger.

## Revendications

1. Machine agricole (10) comprenant un cadre central, qui porte au moins deux bras (12, 14), dans laquelle une unité de travail (16, 18) pour le traitement de la récolte est disposée sur chaque bras, dans laquelle un dispositif de support (20, 22) est prévu, par l'intermédiaire duquel l'unité de travail (16, 18) est maintenue sur le bras (12, 14), dans laquelle un dispositif de déplacement (24, 26) associé au bras est en outre prévu, qui peut amener l'unité de travail (16, 18) par rapport au bras (12, 14) dans une position de transport et dans une position de travail, dans laquelle, dans la position de transport, l'unité de travail (16, 18) est soulevée du sol et, dans la position de travail, repose sur le sol, dans laquelle le dispositif de déplacement (24, 26) comprend au moins un cylindre de déblai (48, 50), qui est directement ou indirectement soutenu par rapport au bras (12, 14) associé et qui est relié directement ou indirectement à l'unité de travail (16, 18), de sorte que, lorsque le cylindre de déblai (48, 50) est sollicité en pression, un décalage de l'unité de travail par rapport au bras s'effectue avec au moins une composante de mouvement verticale, dans laquelle le dispositif de déplacement (24, 26) comprend un cylindre de décalage latéral (52), qui est soutenu par rapport à l'unité de travail (16, 18) et au bras (12, 14) et, lors d'une sollicitation en pression, permet un mouvement de l'unité de travail (16, 18) avec une composante horizontale,
**caractérisée en ce que** l'au moins un cylindre de déblai (48, 50), avec sa première chambre de cylindre (48a, 50a) sollicitant le cylindre de déblai (48, 50) dans une direction de déblai, est regroupé avec la première chambre de cylindre (52a) du cylindre de décalage latéral (52), qui agit dans la direction de décalage.

2. Machine agricole selon la revendication 1, **caractérisée en ce que** la première chambre de cylindre est la chambre de piston (48a, 50a, 52a) du cylindre de déblai (48, 50, 52) et du cylindre de décalage latéral.

3. Machine agricole selon l'une quelconque des revendications précédentes, **caractérisée en ce que** la deuxième chambre de cylindre, en particulier la chambre annulaire (52b), du cylindre de décalage latéral (52), est reliée à un accumulateur de pression (54).

4. Machine agricole selon l'une quelconque des revendications précédentes, **caractérisée en ce que** le dispositif de déplacement (24, 26) comprend au moins une tige de traction (44, 46), par l'intermédiaire de laquelle l'unité de travail (16, 18) est reliée au cylindre de déblai (48, 50), de telle sorte que la tige de traction (44, 46), dans une position de transport, entraîne l'unité de travail (16, 18) dans la direction de déblai et, dans la position de travail, permet une mobilité libre dans la direction longitudinale de la tige de traction (44, 46) par rapport au cylindre de déblai (48, 50).

5. Machine agricole selon la revendication 4, **caractérisée en ce que** le dispositif de déplacement (24, 26) comprend un bloc de déplacement (42), qui est disposé de manière pivotante par rapport au bras (12, 14), dans laquelle deux tiges de traction (44, 46) sont articulées par l'intermédiaire d'un bloc de déplacement (42).

6. Machine agricole selon l'une des revendications précédentes 4 ou 5, **caractérisée en ce que** la tige de traction (44, 46) présente un élément de tige, qui est pourvu dans la direction longitudinale d'un trou oblong, qui coopère avec un axe entraîné avec le cylindre de déblai (48, 50).

7. Machine agricole selon l'une quelconque des revendications précédentes, **caractérisée en ce que** le dispositif de support (20, 22) comprend au moins deux barres inférieures (32, 34), dans laquelle les barres sont reliées chacune par l'intermédiaire d'un palier à tête sphérique (38, 40) aussi bien au bras (12, 14) qu'à l'unité de travail (16, 18).

8. Machine agricole selon l'une quelconque des revendications précédentes, **caractérisée en ce que** le dispositif de support comprend un cylindre de barre supérieure (36), qui est relié respectivement par l'intermédiaire d'un raccordement à tête sphérique à l'unité de travail (16, 18) et au bras (12, 14).

9. Machine agricole selon l'une quelconque des revendications précédentes, **caractérisée en ce que** l'unité de travail (16, 18) est portée par l'intermédiaire de ce qu'on appelle des bols glisseurs ou patins.

10. Machine agricole selon l'une quelconque des revendications précédentes, **caractérisée en ce que** l'unité de travail (16, 18) est un andaineur à tapis.
